# EUROPÄISCHE PATENTSCHRIFT

(11) **EP 0 780 962 B1**
(45) Veröffentlichungstag und Bekanntmachung des Hinweises auf die Patenterteilung: **28.02.2001**
(21) Anmeldenummer: 96119750.6
(22) Anmeldetag: 10.12.1996
(51) Int. Cl.: H02P 6/00, H02P 6/12

(54) **Elektronisch kommutierter Motor**
Electronically commutated motor
Moteur commuté électroniquement

(30) Priorität: 18.12.1995 DE 19547216
(43) Veröffentlichungstag der Anmeldung: 25.06.1997
(73) Patentinhaber: PAPST-MOTOREN GmbH & Co. KG, 78106 St Georgen (DE)
(72) Erfinder: Dieterle, Roland, 78112 St. Georgen (DE); Karwath,Arno,Dipl.-Ing., 78628 Rottweil (DE); Rappenecker,Hermann,Dipl.-Ing., 78147 Vöhrenbach (DE); von der Heydt,Thomas, 78112 St.Georgen (DE)

(56) Entgegenhaltungen:
- EP-A- 0 540 417
- EP-A- 0 658 973
- GB-A- 2 247 999

## Beschreibung

Die Erfindung betrifft einen elektronisch kommutierten Motor mit Steuerung von Funktionen durch einen Mikroprozessor oder Mikrocontroller, im folgenden Mikroprozessor genannt.

Bei derartigen Motoren tritt das Problem auf, daß durch elektrische Störsignale auf den Zuleitungen des Motors der Mikroprozessor gestört werden kann und sich dann ggf. "aufhängt", so daß der Motor zum Stillstand kommt. Dies kann auftreten durch Bursts transienter Impulsgruppen, oder durch ESD-Signale (ESD = electrostatic discharge), also Signale durch elektrostatische Entladungen, wie sie in Umgebungen mit starken elektrischen Störungen auftreten können.

Man versucht, sich hierbei dadurch zu helfen, daß man die Eingänge eines solchen Mikroprozessors mit entsprechenden Schutzschaltungen versieht, doch ist das aufwendig und führt nicht immer zum gewünschten Resultat.

Aus der EP-A1-0 658 973 kennt man einen Elektromotor, dem ein Mikroprozessor zugeordnet ist. Dieser Motor verwendet motorgesteuerte Resetvorgänge, die von dem beim Einschalten auftretenden Resetvorgang durch ein zusätzliches Signal an einem Eingang des Mikroprozessors unterschieden werden, das dort durch eine Speicherzelle bereitgestellt wird. Damit läßt sich ein sicherer Lauf des Motors erreichen. Jedoch besteht die Gefahr, daß dann, wenn der Mikroprozessor defekt wird, die Statorwicklungen des Motors ständig Strom erhalten und überhitzt werden.

Aus der EP-A1-0 540 417 ist ein elektronisch kommutierter Motor mit einer Strombegrenzung bekannt, die nach Art einer elektronischen Sicherung den Strom im Motor unterbricht, wenn dieser zu hoch wird.

Es ist eine Aufgabe der Erfindung, einen neuen elektronisch kommutierten Motor bereitzustellen.

Nach der Erfindung wird diese Aufgabe gelöst durch einen elektronisch kommutierten Motor gemäß Patentanspruch 1. Watchdog-Zeitglieder sind im Zusammenhang mit Mikroprozessoren bekannt, und es ist üblich, diesen vom Mikroprozessor, solange dieser ordnungsgemäß funktioniert, Rückstellimpulse zuzuführen. Eine Sicherheit gegen Fehlfunktionen des Mikroprozessors ist damit aber nicht verbunden, denn es kann sehr wohl sein, daß der Mikroprozessor weiterhin Rückstellimpulse abgibt, daß aber an einem seiner Ausgänge ein Defekt vorliegt, der dann zu einer Überhitzung des von diesem Ausgang gesteuerten Motors führt. Dadurch, daß die Rückstellimpulse gemäß Anspruch 1 nicht wie üblich vom Mikroprozessor, sondern vom Motor kommen und durch dessen Drehung ausgelöst werden, wird die Sicherheit der gesamten Anordnung wesentlich erhöht, denn wenn aus welchen Gründen auch immer, der Motor nicht mehr läuft, bleiben die Rückstellimpulse aus, und das Watchdog-Zeitglied wird aktiviert. Dieses enthält einen Multivibrator mit niedriger Schwingungsfrequenz, welcher bei laufendem Motor durch bei Drehung des Motors erzeugte Signale, zumindest oberhalb einer vorgegebenen Motordrehzahl, im deaktivierten Zustand gehalten wird. Das Watchdog-Zeitglied tritt also erst dann in Aktion, wenn die Motordrehzahl unter den vorgegebenen Wert fällt, bzw., wenn der Motor zum Stillstand gekommen ist. Und es unterbricht im aktivierten Zustand periodisch und ohne Einschaltung des Mikroprozessors den Statorstrom des Motors. Dadurch, daß das Watchdog-Zeitglied bei seinem Ansprechen den Statorstrom des Motors direkt unterbricht, also nicht auf dem Umweg über den Mikroprozessor,ist eine hohe Sicherheit gegen Ausfall des Mikroprozessors gegeben, da die übrigen Teile der Motorschaltung in diesem Fall weiter funktionieren und sicherstellen, daß der Motor nicht überhitzt wird.

In bevorzugter Weise wird ein solcher Motor gemäß Anspruch 2 weitergebildet. Durch das niedrige Tastverhältnis entstehen lange Pausen, in denen kein Strom im Motor fließt, so daß die Gefahr einer Motorüberhitzung sicher entfällt.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: ein Übersichtsschaltbild eines erfindungsgemäßen elektronisch kommutierten Motors,
- Fig. 2: eine Darstellung der verschiedenen Anschlüsse eines beim Ausführungsbeispiel verwendeten Mikroprozessors 17P103 der Firma NEC, und der hierfür verwendeten Bezeichnungen,
- Fig. 3 und 4: Schaubilder zur Erläuterung der Wirkungsweise,
- Fig. 5: ein Blockschaltbild zur Erläuterung des Zusammenwirkens der verschiedenen Teile der Fig. 1,
- Fig. 6: ein Flußdiagramm zur Erläuterung, wie bestimmte Resetvorgänge voneinander unterschieden werden,
- Fig. 7: ein Flußdiagramm zur Erläuterung des Ablaufs der Kommutierung,
- Fig. 8: ein Schaltbild einer Variante des Watchdog-Zeitglieds, und
- Fig. 9: eine Variante zu Fig. 8.

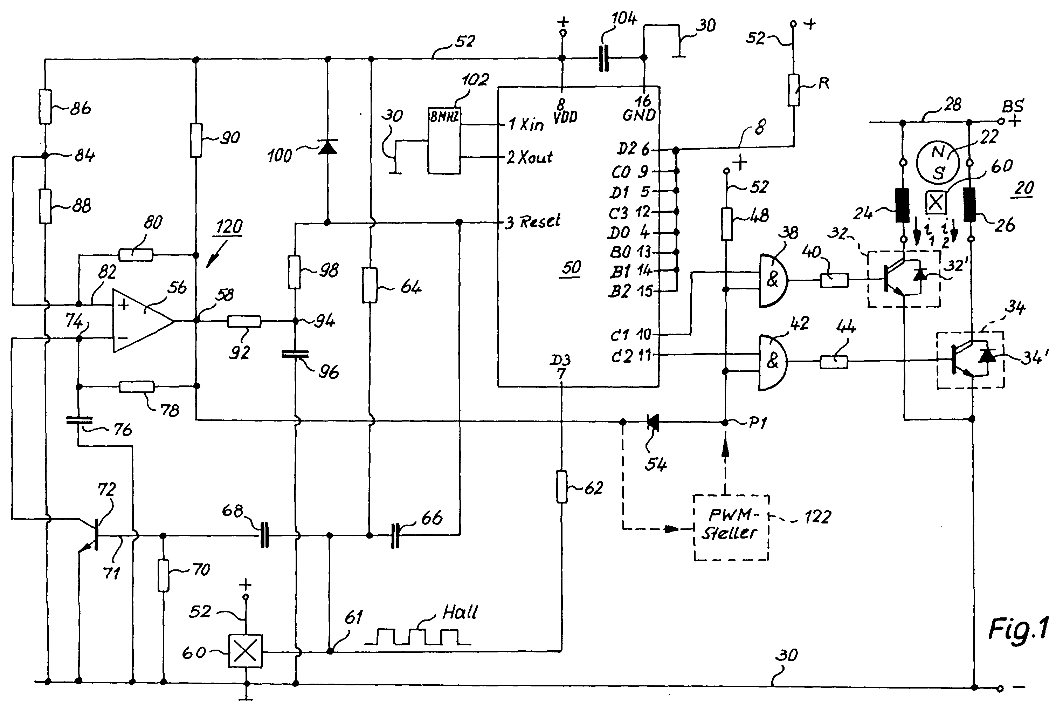

**Fig. 1** zeigt die Schaltung eines bevorzugten Ausführungsbeispiels eines elektronisch kommutierten Motors (ECM) 20, der hier als zweipulsiger, zweisträngiger Motor dargestellt ist. Selbstverständlich eignet sich die Erfindung für jede Art von Motor, wobei dieser Motor auch ein Kollektormotor sein kann, sofern er bei seiner Drehung Kontrollimpulse erzeugt, z.B. durch einen Tachogenerator oder einen im oder am Motor angeordneten Hallgenerator.

Der permanentmagnetische Rotor des Motors 20 ist schematisch bei 22 angedeutet, und die beiden Stränge seiner Statorwicklung haben die Bezugszeichen 24 und 26. Diese sind, wie dargestellt, an eine Plusleitung 28 angeschlossen, die z.B. + 12 V, + 24 V oder + 48 V gegenüber dem Potential einer Minusleitung 30 haben kann.

Zur Steuerung des Stromes i₁ im Strang 24 dient ein npn-Darlingtontransistor 32, und zur Steuerung des Stromes i₂ im Strang 26 ein entsprechender Transistor 34, die beide mit einer Freilaufdiode 32' bzw. 34' versehen sind. Die Emitter beider Transistoren 32, 34 sind mit der Minusleitung 30 verbunden, ihre Kollektoren mit den Strängen 24 bzw. 26.

Die Basis des Transistors 32 wird von einem UND-Glied 38 über einen Widerstand 40 angesteuert, ebenso die Basis des Transistors 34 von einem UND-Glied 42 über einen Widerstand 44. Ein Eingang des UND-Glieds 38, ist mit dem Ausgang C1 eines Mikroprozessors 50 verbunden, der andere über einen Widerstand 48 mit einer Versorgungs-Plusleitung 52 von z.B. + 5 V, ebenso dem entsprechenden Eingang des UND-Glieds 42, und der Anode einer Diode 54, deren Katode mit dem Ausgang 58 eines Operationsverstärkers 56 verbunden ist. Der andere Eingang des UND-Glieds 42 ist mit dem Ausgang C2 des Mikroprozessors 50 verbunden.

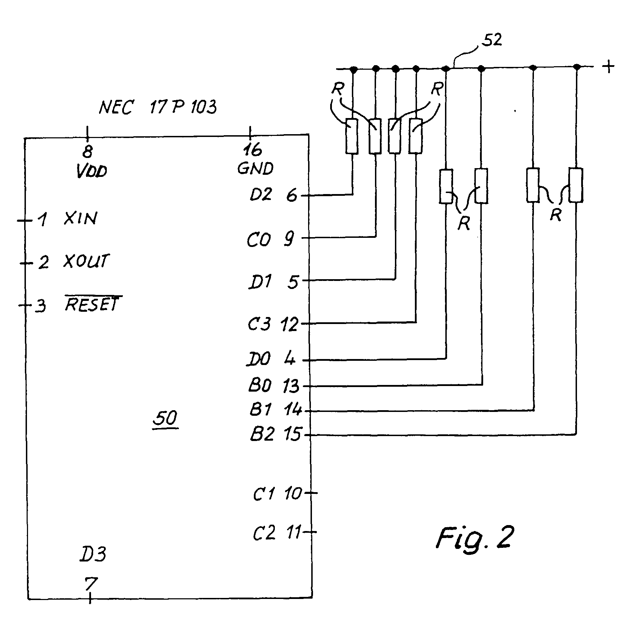

Die einzelnen Anschlüsse des Mikroprozessors 50, hier eines 4-Bit-Mikroprozessors vom Typ 17P103 (Hersteller NEC) sind in Fig.2 schematisch dargestellt. Wie man erkennt, sind die Anschlüsse B0, B1, B2, C0, C3, D0, D1, D2 jeweils über einen Widerstand R an die Plusleitung 52 (+5 V) angeschlossen. Dieser Widerstand R kann z.B. einen Wert von 47 kΩ haben.

In der Nähe des Rotors 22 ist ein Hall-IC 60 angeordnet, der in Fig. 1 auf der linken Seite unten nochmals dargestellt ist, und der im Betrieb rechteckförmige Impulse "Hall" erzeugt, die in Fig. 1 schematisch dargestellt sind. Diese werden über einen Widerstand 62 dem Eingang D3 des Mikroprozessors 50 zugeführt, ferner über ein erstes Differenzierglied (Widerstand 64 und Kondensator 66) dem Reseteingang RESET/ des Mikroprozessors 50, und über ein zweites Differenzierglied (Kondensator 68, Widerstand 70) der Basis 71 eines npn-Transistors 72, dessen Emitter mit der Minusleitung 30 und dessen Kollektor mit dem Minuseingang 74 des Operationsverstärkers 56 verbunden ist.

Ein Kondensator 76 ist zwischen diesem Eingang 74 und der Minusleitung 30 angeordnet, und ein Widerstand 78 zwischen diesem Eingang 74 und dem Ausgang 58. Ebenso ist ein Widerstand 80 zwischen dem Pluseingang 82 des Operationsverstärkers 56 und dessen Ausgang 58 angeordnet, und dieser Pluseingang 82 liegt am Verbindungspunkt 84 zweier Widerständen 86, 88, von denen der erstere mit der Plusleitung 52 und der letztere mit der Minusleitung 30 verbunden ist.

Zwischen dem Ausgang 58 und der Plusleitung 52 liegt ein Widerstand 90. Ein Widerstand 92 verbindet diesen Ausgang mit einem Knotenpunkt 94, der über einen Kondensator 96 mit der Minusleitung 30 und über einen Widerstand 98 mit dem Reseteingang 3 des Mikroprozessors 50 verbunden ist. Der Eingang 3 ist auch mit der Anode einer Diode 100 verbunden, deren Katode mit der Plusleitung 52 verbunden ist. Diese verhindert, daß der Reseteingang RESET/ ein höheres Potential annimmt als die Plusleitung 52.

Als Taktgeber ist ein Keramikresonator 102 (8 MHz) in der dargestellten Weise an die Eingänge XIN und XOUT des Mikroprozessors 50 angeschlossen. Zwischen dem Eingang V₀₀ des Mikroprozessors 50 und dessen Eingang GND liegt ein Kondensator 104, der verhindert, daß Störimpulse über die Plusleitung 52 zum Mikroprozessor 50 gelangen.

### Beispielhafte Werte der Komponenten, soweit nicht bereits angegeben:

Widerstände 40, 44 .... 1 k (k = KΩ)
Widerstände 48, 64 ... 10 k
Widerstände 70, 80, 92 ... 100 k
Widerstand 62 ... 33 k
Widerstand 86 ... 330 k
Widerstände 88, 90 ... 22 k
Widerstand 78 ... 810 k
Widerstand 98 ... 100 k
Kondensatoren 96, 104 ... 100 nF
Kondensator 68 ... 1,5 nF
Kondensator 66 ... 3,3 nF
Kondensator 76 ... 2,2 µF
Transistoren 32, 34 ... BD679
Dioden 54, 100 ... 1N4148
Transistor 72 ... BC846B
UND-Glieder 38, 42 ... 7408
Operationsverstärker 56 ... LM324

### Arbeitsweise

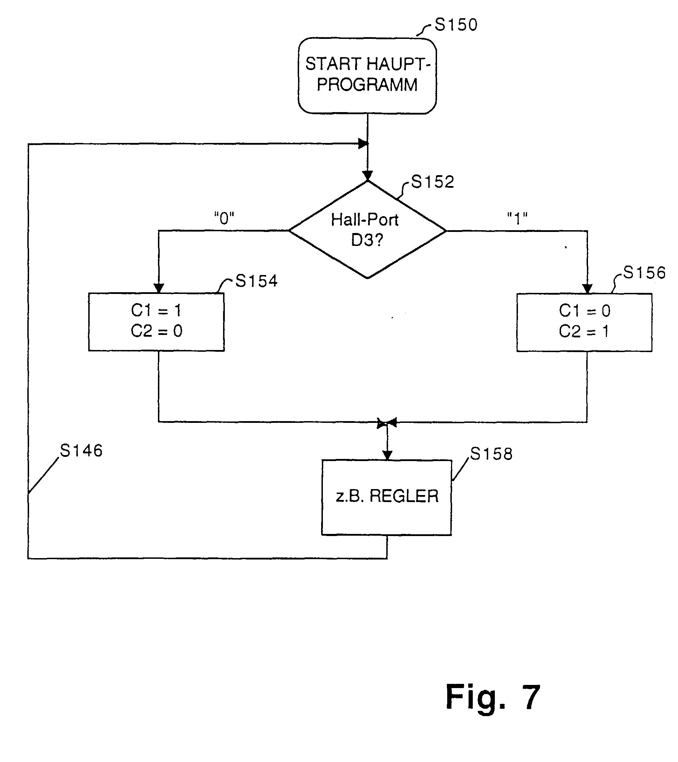

Das Signal Hall, dessen Frequenz der Drehzahl des Motors 20 proportional ist, wird dem Eingang D3 des Mikroprozessors 50 über den Widerstand 62 zugeführt, damit der Mikroprozessor die Kommutierungssignale an den Ausgängen C1 und C2 richtig steuern kann, wie das nachfolgend anhand des Flußdiagramms der Fig. 7 ausführlich beschrieben und erläutert wird. Der Widerstand 62 verhindert, daß bei einem internen Kurzschluß oder einer Störung im Mikroprozessor 50 das Signal Hall kurzgeschlossen wird und stellt deshalb ein wichtiges Sicherheitsmerkmal dar, denn ohne diesen Widerstand 62 wäre in diesem Fall der zyklische Resetvorgang nicht mehr möglich.

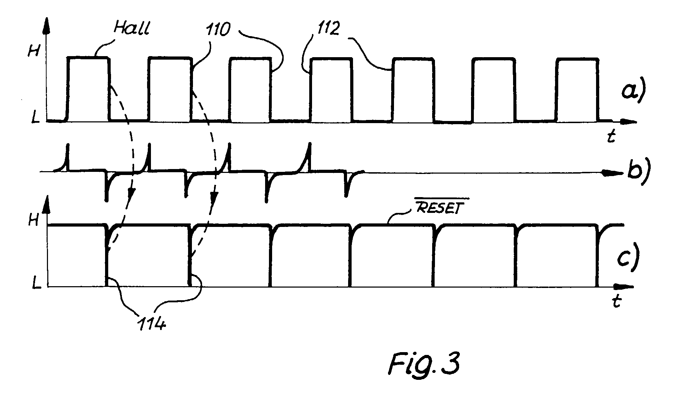

Über den Kondensator 66 wird das Signal Hall (Fig. 3a) differenziert und in differenzierter Form (Fig. 3b) dem Eingang RESET/ des Mikroprozessors 50 zugeführt. Bei jeder negativen Flanke 110 des Signals Hall wird dieser Eingang kurzzeitig nach 0 V gezogen, also auf das Potential der Minusleitung 30, und bei jeder positiven Flanke 112 erhält dieser Eingang RESET/ kurzzeitig ein positiveres Potential, das aber, sobald es 5,7 V überschreitet, über die Diode 100 abgeleitet und vom Kondensator 104 abgepuffert wird, damit der Mikroprozessor 50 nicht durch dieses Signal beschädigt oder zerstört wird.

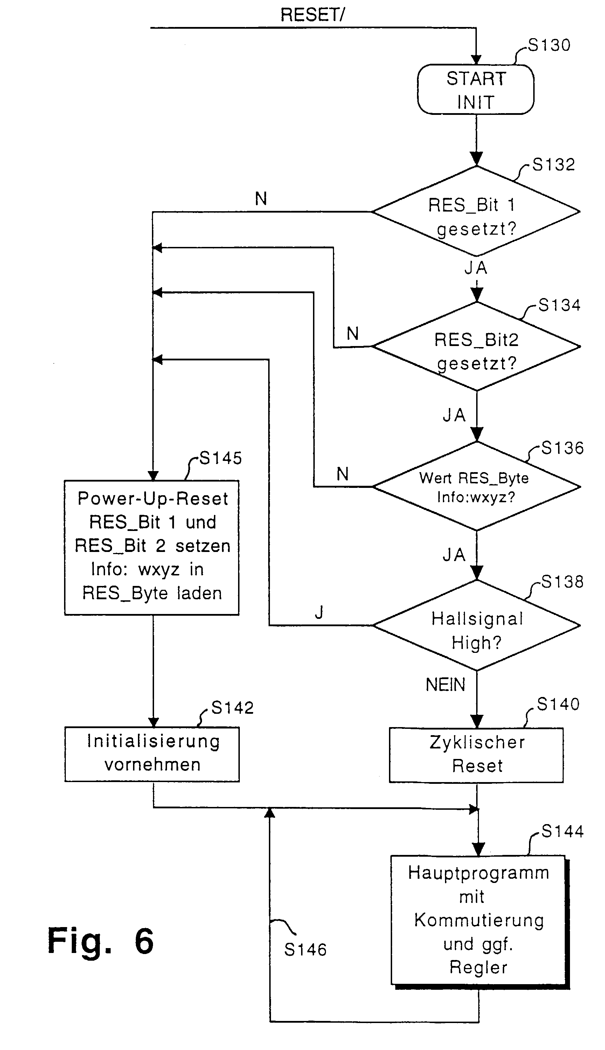

Hierdurch entstehen also im Potential des Eingangs RESET/, das in Fig. 3c dargestellt ist, bei jeder negativen Hallflanke 110 kurze Spannungseinbrüche 114, welche einen zyklischen Resetvorgang im Mikroprozessor 50 bewirken, also vor allem eine Rückstellung des Programmzählers auf einen vorgegebenen Wert. Dies wird nachfolgend anhand der Fig. 6 und 7 ausführlich erläutert. Außerdem wird hierzu verwiesen auf die deutsche Patentanmeldung P 44 42 450.7 (D184i = DE-3011).

Da der Hall-IC 60 einen Ausgang mit offenem Kollektor hat, hat er einen Pullup-Widerstand 64, der den Ausgang 61 des Hall-IC 60 positiv macht, wenn dessen interner Ausgangstransistor gesperrt wird.

Der Kondensator 68 und der Widerstand 70 bilden ein Differenzierglied, das bei jeder positiven Flanke 112 des Signals Hall einen positiven Impuls erzeugt, welcher den Transistor 72 kurzzeitig leitend macht, wodurch dieser kurzzeitig den Minuseingang 74 des Operationsverstärkers 56 nach 0 V zieht und dabei den Kondensator 76 entlädt.

Der Operationsverstärker 56 bildet, zusammen mit seinen passiven Bauelementen, ein sogenanntes Watchdog-Zeitglied 120, das im folgenden als WD-Zeitglied bezeichnet wird. Mit diesem Begriff bezeichnet man eine Schaltung, die verhindern soll, daß sich ein Mikroprozessor 50 durch Störimpulse oder dergleichen "aufhängt", also irgendwo in seinem Programm stehenbleibt und die Arbeit verweigert. Das WD-Zeitglied 120 tritt nur dann nicht in Aktion, wenn ihm ständig sogenannte Refresh-Impulse zugeführt werden, die es daran hindern, aktiv zu werden, und diese Refresh-Impulse erhält es im vorliegenden Fall über das Differenzierglied 68, 70 und den Transistor 72.

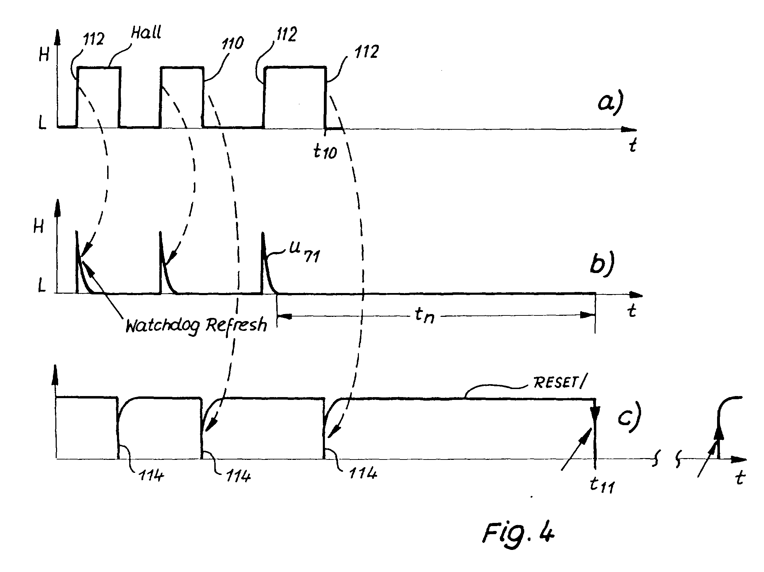

**Fig. 4** zeigt den eben beschriebenen Ablauf. Bei a) sind die Signale Hall bei abnehmender Drehzahl dargestellt. Ihre positiven Flanken 112 bewirken die in Fig. 4b dargestellten positiven Impulse u₇₁ an der Basis 71 des Transistors 72, und diese Impulse bewirken eine ständige Entladung des Kondensators 76, solange der Motor 20 läuft, d.h. der Motor 20, solange er läuft, bewirkt die Refresh-Signale für das WD-Zeitglied 120, so daß dieses bei laufendem Motor 20 nicht aktiviert werden kann.

Bleibt der Motor etwa zum Zeitpunkt t₁₀ (Fig. 4a) stehen, z.B., weil er blockiert wird, so bleiben die Impulse u₇₁ aus, der Kondensator 76 wird nicht mehr entladen und wird über die Widerstände 90 und 78 aufgeladen, so daß der Minuseingang 74 des Operationsverstärkers 56 schließlich zum Zeitpunkt t₁₁ (Fig. 4c) positiver wird als der Pluseingang 82 und folglich das Signal am Ausgang 58 des Operationsverstärkers 56 das Potential 0 V annimmt.

Diese Potentialänderung wird durch den Widerstand 92 und den Kondensator 96 verzögert und über den Widerstand 98 dem Mikroprozessor 50 als Watchdog-Resetsignal zugeführt. Dadurch führt der Mikroprozessor 50 in diesem Fall einen Power-Up-Reset durch, genauso wie beim Einschalten: Beim Einschaltvorgang ist der Kondensator 96 entladen, d.h. der Eingang RESET/ hat beim Einschalten zunächst das Potential 0 V, und erst, wenn sich der Kondensator 96 über die Widerstände 90 und 92 aufgeladen hat, erhält dieser Eingang das Signal High. Dadurch entsteht beim Einschalten des Motors 20 automatisch ein Power-Up-Resetvorgang.

Wird das Potential am Ausgang 58 zu 0 V, so wird die Diode 54 leitend, so daß die entsprechenden Eingänge der UND-Glieder 38 und 42 ein entsprechendes niedriges Potential erhalten und beide Transistoren 32 und 34 gesperrt werden, solange der Ausgang 58 niedrig ist. Dies stellt eine sogenannte Blockiersicherung dar, d.h. wenn der Motor 20 daran gehindert ist, sich zu drehen, wird das WD-Zeitglied 120 - durch den Wegfall der Impulse Hall - aktiviert und sperrt die beiden Transistoren 32 und 34, solange der Ausgang 58 das Potential 0 V hat.

Ist der Ausgang 58 niedrig, so wird der Kondensator 76 über den Widerstand 78 entladen, und deshalb wird nach einiger Zeit das Potential am Minuseingang 74 wieder negativer als das Potential am Pluseingang 82, wodurch der Ausgang 58 wieder hoch wird. Dadurch wird derjenige der Transistoren 32, 34, der vom Mikroprozessor 50 ein entsprechendes Kommutierungssignal erhält, wieder leitend, und der Motor 20 versucht, wieder anzulaufen.

Sofern dies gelingt, entstehen erneut die Impulse Hall, welche den Kondensator 76 periodisch entladen und das WD-Zeitglied 120 deaktivieren. Erfolgt aber kein Anlauf, so wiederholt sich der beschriebene Zyklus, d.h. das WD-Zeitglied 120 oszilliert mit einer sehr niedrigen Frequenz von z.B. 0,2 Hz, gibt laufend Resetimpulse an den Mikroprozessor 50, und schaltet den Transistor 32 oder 34 jeweils z.B. eine Sekunde ein und vier Sekunden aus, so daß sich der Motor 20 nicht überhitzen kann, aber doch erneut startet, wenn die Blockierung weggefallen ist. Man nennt dies eine Blockiersicherung mit automatischem Wiederanlauf.

Während eines Resetvorgangs durch Änderung des Potentials am Ausgang 58 wird durch den beschriebenen Vorgang der Motor 20 komplett abgeschaltet, was deshalb vorteilhaft ist, weil beim Resetvorgang möglicherweise undefinierte Zustände an den Ausgängen C1 und C2 des Mikroprozessors 50 auftreten könnten. Da der Motor 20 aber während dieses Resetvorgangs keinen Strom erhalten kann, stört das nicht, was einen weiteren Vorteil der Erfindung darstellt.

Alternativ könnte man am Punkt P1, also der Anode der Diode 54, ein PWM-Signal von einem PWM-Steller 122 zuführen, und man würde dann das Tastverhältnis dieses PWM-Stellers 122 auf 0 % einstellen, wenn das Potential am Ausgang 58 zu 0 V wird. Diese Variante ist in Fig. 1 mit gestrichelten Linien angedeutet; in diesem Fall würde die Diode 54 entfallen. Der PWM-Steller 122 kann Teil eines Stromreglers oder eines Drehzahlreglers (nicht dargestellt) sein.

Sofern zur Ansteuerung des Motors 20 eine sogenannte Vollbrückenschaltung (nicht dargestellt) verwendet wird, müssen deren Schaltglieder in bekannter Weise gegenseitig verriegelt (latched) werden, damit ein Kurzschluß in dieser Vollbrückenschaltung auch dann sicher vermieden wird, wenn eine Störung im Mikroprozessor 50 auftritt. Entsprechende Schaltungen für Vollbrückenschaltungen sind bekannt.

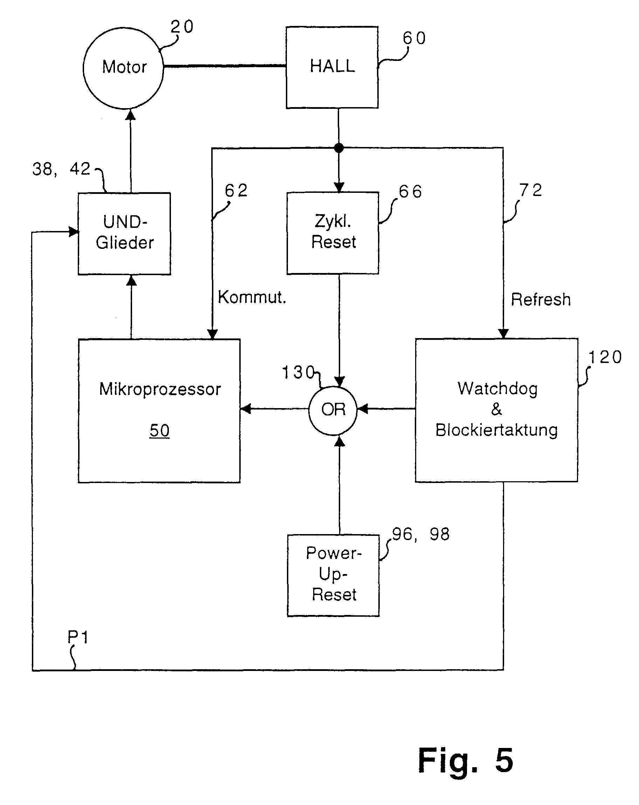

**Fig. 5** zeigt den prinzipiellen Aufbau der Schaltung gemäß Fig. 1 in Form eines Blockschaltbilds. Mit dem Motor 20 ist der Hall-IC 60 gekoppelt, und dieser liefert bei Drehung des Motors 20 über den Transistor 72 Refresh-Impulse an das WD-Zeitglied 120, so daß dieses im nicht aktivierten Zustand gehalten wird.

Ferner liefert der Hall-IC 60 (über den Kondensator 66) zyklische Resetsignale an den Mikroprozessor 50, und beim Start erfolgt ein Power-Up-Reset über den Kondensator 96 und den Widerstand 98.

Über das Signal am Punkt P1, das vom WD-Zeitglied 120 geliefert wird, werden die UND-Glieder 38, 42 gesteuert.

Der Mikroprozessor 50 selbst wird beim Lauf des Motors 20 periodisch über einen zyklischen Resetvorgang 66 rückgestellt, oder - beim Einschalten - über den Power-Up-Reset 96, 98, oder - beim Blockieren des Motors 20 - über das WD-Zeitglied 120. Diese alternativen Möglichkeiten sind durch ein ODER-Symbol 130 symbolisiert.

Über die Verbindung 62 (= Widerstand 62 in Fig. 1) erhält der Mikroprozessor 50 die Kommutierungssignale Hall vom Hall-IC 60, so daß er den Motor 20 richtig steuert.

**Fig. 6** zeigt das Flußdiagramm für die Unterscheidung der verschiedenen Resetvorgänge, und zwar in Form einer reinen Softwarelösung. Dieses Programm unterscheidet zwischen
a) einem Power-Up-Reset, wie er nur beim Einschalten des Motors durchgeführt wird, und
b) Resetvorgängen, die im Betrieb des Motors auftreten, also
   b1) zyklischen Resetvorgängen und
   b2) WD-Resetsignalen durch Aktivierung des WD-Zeitglieds 120.
   Gerade bei komplexen Programmen für die Steuerung von elektronisch kommutierten Motoren - diese Programme können einen erheblichen Umfang erreichen - ist diese Unterscheidung sehr wichtig.

Nach einem Resetvorgang springt das Programm, gesteuert durch den Adreßzähler des Mikroprozessors 50, zum Schritt S130, wo ggf. eine kurze Initialisierung erfolgen kann.

Anschließend wird im Schritt S132 abgefragt, ob die Speicherzelle RES_Bit1 im Mikroprozessor 50 gesetzt ist. Falls dies der Fall ist, geht das Programm zum Schritt S134, wo dieselbe Abfrage für die interne Speicherzelle RES_Bit2 erfolgt. Ist auch hier die Antwort positiv, so geht das Programm zum Schritt S136, wo abgefragt wird, ob die Speicherzellen für das Byte RES_Byte den Wert wxyz enthalten.

Falls auch hier die Antwort JA ist, geht das Programm ggf. zum Schritt S138, wo abgefragt wird, ob das Hallsignal hoch ist. Da nämlich gemäß Fig. 3 ein zyklischer Resetvorgang nur bei der negativen Flanke 110 eines Hallsignals stattfindet, muß nach einem zyklischen Resetvorgang das Hallsignal niedrig sein, d.h. ein hohes Hallsignal bedeutet, daß kein zyklischer Resetvorgang stattgefunden haben kann und es sich um einen Power-Up-Reset handeln muß. Der Schritt S138 kann ggf. auch entfallen, wenn bereits durch die Schritte S132, 134, 136 eine ausreichend hohe Sicherheit gegeben ist.

Lautet im Schritt S138 die Antwort NEIN, so wird im Schritt S140 ein zyklischer Resetvorgang durchgeführt, und in diesem Fall wird keine ausführliche Initialisierung (Schritt S142) durchgeführt, sondern es wird nur der Programmzähler auf einen bestimmten Wert rückgestellt und erneut gestartet, und das Flußdiagramm geht in diesem Fall weiter zum Schritt S144, also zum Hauptprogramm mit Kommutierung (soweit es sich nicht um einen Kollektormotor handelt) und ggf. Drehzahlregelung; der Schritt S144 wird nachfolgend anhand der Fig. 7 erläutert.

Die Schritte S132, 134, 136, und ggf. 138, der Fig. 6 sind ein Schlüsselsystem, d.h. das Programm kann nur zum Schritt S140 gelangen, wenn es die richtigen Schlüssel für die internen Speicherzellen RES_Bit 1, 2 und das RES_Byte hat, und dies ist nur der Fall, wenn in diese Speicherzellen zuvor bestimmte Werte geladen wurden. Direkt nach dem Einschalten ist dies nicht der Fall, sondern dann haben diese Speicherzellen Zufallswerte, so daß direkt nach dem Einschalten immer bei mindestens einem der Schritte S132 bis S136 die Antwort NEIN lauten wird. Bei einer solchen negativen Antwort geht das Programm zum Schritt S145, d.h. in diesem Fall erkennt das Programm automatisch, daß es sich um einen Power-Up-Resetvorgang handeln muß.

Im Schritt S145 werden die internen Speicherzellen RES_Bit1 und 2 gesetzt, und die Information wxyz wird in das RES_Byte geladen, so daß bei jedem nachfolgenden Resetvorgang die Abfragen S132 bis S136 mit JA beantwortet werden und folglich nur ein zyklischer Resetvorgang durchgeführt wird.

Auf den Schritt S145 folgt der Schritt S142, wo nach dem Einschalten eine ausführliche Initialisierung vorgenommen wird, z.B. Laden eines Drehzahl-Sollwerts, Abfragen von Registern, etc. Anschließend geht das Programm ebenfalls zum Schritt S144, also zum Hauptprogramm, das hier in Form einer Schleife S146 aufgebaut ist, für deren Durchlauf eine konstante Zeit benötigt wird, z.B. 80 µs, und die im Betrieb fortlaufend durchlaufen wird, aber unterbrochen durch die zyklischen Resetvorgänge (S140) bei den negativen Flanken 110 des Signals Hall.

**Fig. 7** zeigt den Aufbau des Hauptprogramms. Bei Schritt S150 erfolgt der Einsprung ins Hauptprogramm, und zwar im Anschluß an den Schritt S140 oder S142 der Fig.6. Im Schritt S152 wird das Signal am Port D3 des Mikroprozessors 50 abgefragt, also das Hallsignal. Hat dieses den Wert "0", so wird im Schritt S154 C1 = 1 und C2 = 0 gemacht, d.h. der Transistor 32 wird leitend gesteuert, und der Transistor 34 wird gesperrt, so daß durch den Strang 24 des Motors 20 der Strom i₁ fließt.

Hat das Signal am Port D3 den Wert "1", so geht das Programm zum Schritt S156, und dort wird C1 = 0 und C2 = 1 gemacht, d.h. der Transistor 32 wird gesperrt und der Transistor 34 wird leitend, so daß durch den Strang 26 der Strom i₂ fließt.

Nach den Schritten S154 oder S156 geht das Programm zum Schritt S158, wo z.B. eine Drehzahlregelung stattfinden kann, oder sonstige motorspezifische Funktionen. Anschließend geht das Programm über die Schleife S146 zurück zum Schritt S152, und diese Schleife S146 wird im Betrieb fortlaufend durchlaufen, unterbrochen nur durch die zyklischen Resetvorgänge (S140) bei den negativen Flanken 110 des Signals Hall, durch Interruptvorgänge, oder durch Störungen, die ein Ansprechen des WD-Zeitglieds 120 bewirken.

Beim Anlauf des Motors 20 ist der Kondensator 76 des WD-Zeitglieds 120 entladen und beginnt erst während des Hochlaufs des Motors 20, sich aufzuladen. Sobald der Motor 20 läuft, wird der Kondensator 76 über den Transistor 72 in der beschriebenen Weise immer wieder entladen. Dadurch ist ein normaler Anlauf des Motors 20 möglich, ohne daß das WD-Zeitglied 120 aktiviert wird.

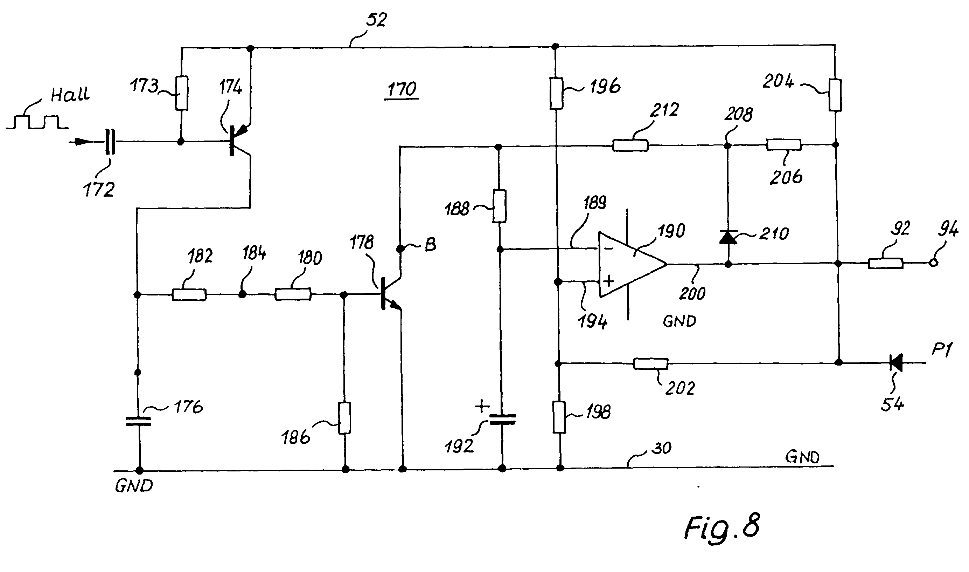

**Fig. 8** zeigt eine Variante für das WD-Zeitglied 120 der Fig. 1. Dieses WD-Zeitglied 170 wird bereits bei niedrigen Drehzahlen aktiviert, umso stärker, je niedriger die Drehzahl wird. Bei normalen Motordrehzahlen wird es nicht aktiviert.

Die Signale Hall werden über ein Differenzierglied aus einem Kondensator 172 und einem Widerstand 173 der Basis eines pnp-Transistors 174 zugeführt, d.h. bei den negativen Flanken 110 des Signals Hall (vgl. Fig. 3a) wird der Transistor 174 jeweils kurz leitend und führt einem Kondensator 176 (z.B. 10 nF), der zwischen seinem Kollektor und der Minusleitung 30 angeschlossen ist, einen Ladeimpuls zu.

Die Basis eines npn-Transistors 178 ist über zwei Widerstände 180, 182, deren Verbindungspunkt mit 184 bezeichnet ist, mit dem Kollektor des Transistors 174 verbunden, dessen Emitter mit der Plusleitung 52 verbunden ist. Ferner liegt zwischen der Basis des Transistors 178 und der Minusleitung 30 ein Widerstand 186. Der Emitter des Transistors 178 ist mit der Minusleitung 30 verbunden, sein Kollektor über einen Widerstand 188 (z.B. 10 k) mit dem Minuseingang 189 eines Komparators 190. Ein Kondensator 192 (z.B. 3,3 µF) liegt zwischen dem Minuseingang 189 und der Minusleitung 30. Er hat die gleiche Funktion wie der Kondensator 76 der Fig. 1.

Der Pluseingang 194 des Komparators 190 ist über einen Widerstand 196 (z.B. 100 k) mit der Plusleitung 52 und über einen Widerstand 198 (z.B. 100 k) mit der Minusleitung 30 verbunden.

Vom Ausgang 200 des Komparators 190 führt ein Widerstand 202 (z.B. 47 k) zum Pluseingang 194, ein Widerstand 204 (z. B. 2 k) zur Plusleitung 52, und ein Widerstand 206 (z.B. 470 k) zu einem Knotenpunkt 208. Eine Diode 210 liegt zwischen Ausgang 200 und Knotenpunkt 208 (Anode am Ausgang 200). Ein Widerstand 212 (z.B. 100 k) liegt zwischen dem Knotenpunkt 208 und dem Kollektor des Transistors 178.

Außerdem ist der Ausgang 200 mit der Katode der Diode 54 (vgl. Fig. 1) verbunden, und über den Widerstand 92 (Fig. 1) mit dem Knotenpunkt 94.

Das WD-Zeitglied 170 gemäß Fig. 8 ersetzt in Fig. 1 den Transistor 72 und das WD-Zeitglied 120. Deshalb sind in Fig. 8 die entsprechenden Verbindungsglieder angegeben, also der Widerstand 92 und die Diode 54.

### Arbeitsweise

Wie bereits beschrieben, wird durch jede differenzierte negative Flanke 110 des Signals Hall der Transistor 174 kurz durchgeschaltet, wodurch der Kondensator 176 aufgeladen wird. Hierdurch wird am Transistor 178 ein Einschaltimpuls von definierter Länge erzeugt, der den Punkt B auf das Potential der Minusleitung 30 schaltet. Hierbei entlädt sich der Kondensator 192 über den Widerstand 188.

Wenn der Transistor 178 zwischen diesen Einschaltimpulsen gesperrt ist, wird der Kondensator 192 über den Widerstand 204, die Diode 210, und die Widerstände 212 und 188 geladen.

Läuft der Motor 20 mit normaler Drehzahl, so hat das Signal Hall eine hohe Frequenz, so daß der Kondensator 192 nur wenig geladen ist, da er immer wieder über den Transistor 178 und den Widerstand 188 entladen wird. Folglich hat der Minuseingang 189 des Komparators 190 ein negativeres Potential als der Pluseingang 194, und der Komparator 190 ist an seinem Ausgang 200 hochohmig, so daß er keinen Resetvorgang auslöst und die Diode 54 gesperrt bleibt, also der Motor 20 normal läuft.

Das Potential am Pluseingang 194 sollte zweckmäßig (durch Wahl der Widerstände 196, 198) so hoch eingestellt sein, daß die Spannung am Kondensator 192 einen großen Spannungsbereich überstreichen kann.

Ist die Drehzahl zu niedrig, so wird der Punkt B weniger oft durch den Transistor 178 mit der Minusleitung 30 verbunden, und es überwiegt jetzt die Aufladung des Kondensators 192 über den Widerstand 204, die Diode 210 und die Widerstände 212 und 188, so daß der Minuseingang 189 des Komparators 190 positiver wird als der Pluseingang 194. Dadurch schaltet der Ausgang 200 auf 0 V, es erfolgt ein WD-Reset, und die Endstufentransistoren 32 und 34 (Fig. 1) werden über die Diode 54 gesperrt.

Hierbei entlädt sich der Kondensator 192 über die Widerstände 188, 212 und 206, außerdem zusätzlich durch die Impulse, die weiterhin vom Hall-IC 60 (Fig. 1) des noch laufenden Motors kommen, so daß die AUS-Zeit, während deren der Komparator 190 an seinem Ausgang das Potential 0 V hat, von der noch vorhandenen Drehzahl abhängig ist. Je niedriger diese wird, umso länger wird diese AUS-Zeit, d.h. es handelt sich um einen dynamischen Überlastschutz für den Motor 20.

Ist der Motor 20 vollständig blockiert, so ist die AUS-Zeit konstant, da sie dann nur durch die Widerstände 188, 212 und 206 bestimmt wird, über die sich der Kondensator 192 entlädt.

Das WD-Zeitglied 170 nach Fig. 8 hat besondere Vorteile beim Hochlauf eines Motors. Es kann sein, daß der Motor beim Hochlauf gehemmt ist, jedoch startet, aber seine Drehzahl nur langsam erhöht. In diesem Fall gibt ihm das Zeitglied 170 mehr Zeit, um seine Betriebsdrehzahl zu erreichen, denn über den Transistor 178 wird der Kondensator 192 immer wieder partiell entladen, solange sich der Motor dreht.

Dauert jedoch der Hochlauf zu lange, so schaltet das Zeitglied 170 irgendwann den Motor ab, so daß dieser nicht überlastet wird.

Anschließend schaltet das Zeitglied 170 nach einer vorgegebenen Pause den Motor erneut ein, und beim zweiten Versuch ist der Anlauf meistens leichter möglich, da sich der Motor bereits gedreht hat. Außerdem verkürzt das Zeitglied 170 automatisch seine AUS-Zeit, wenn der Motor läuft.

Ist dagegen der Motor blockiert, d.h. er hat die Drehzahl Null, so ist die Einschaltzeit des Zeitglieds 170 kurz und die Ausschaltzeit lang, was den Motor vor Überhitzung schützt, aber doch einen Wiederanlauf sicherstellt, wenn die Blockierung des Motors weggefallen ist.

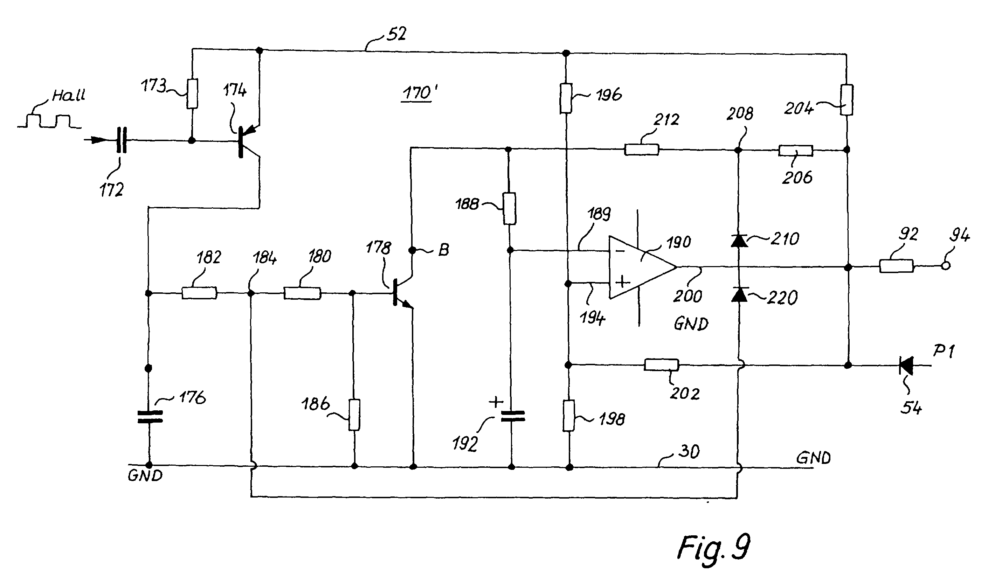

**Fig. 9** zeigt eine Variante 170'. Bei ihr ist der Ausgang 200 des Komparators 190 über eine Diode 220 mit dem Punkt 184 verbunden, wobei ihre Anode an diesen Punkt angeschlossen ist. Wenn der Ausgang 200 das Potential 0 V annimmt, wird auch der Punkt 184 auf etwa 0 V gelegt, so daß der Transistor 178 nicht mehr leitend gesteuert werden kann. In diesem Fall ist also die AUS-Zeit nicht von der Drehzahl des Motors abhängig, sondern konstant.

Naturgemäß sind im Rahmen der vorliegenden Erfindung vielfache Abwandlungen und Modifikationen möglich. Die Zeitglieder 170, 170' gemäß Fig. 8 und 9 können auch bei Motoren verwendet werden, die nicht durch einen Mikroprozessor gesteuert werden, sondern durch konventionelle Kommutierungsschaltungen.

## Patentansprüche

1. Elektronisch kommutierter Motor mit Steuerung von Funktionen durch einen Mikroprozessor oder Mikrocontroller (50), im folgenden generell "Mikroprozessor" genannt,
mit einem außerhalb des Mikroprozessors (50) angeordneten Watchdog-Zeitglied (120; 170; 170'), das einen Multivibrator mit niedriger Schwingungsfrequenz enthält,
- welcher bei laufendem Motor (20) durch bei Drehung des Motors erzeugte Signale, zumindest oberhalb einer vorgegebenen Motordrehzahl, in einem deaktivierten Zustand gehalten wird,
- und welcher im aktivierten Zustand, periodisch, und ohne Einschaltung des Mikroprozessors (50), den Statorstrom (i1, i2) des Motors (20) unterbricht.

2. Motor nach Anspruch 1, bei welchem der Multivibrator im aktivierten Zustand den Statorstrom (i1, i2) des Motors (20) mit einem niedrigen Tastverhältnis unterbricht, so daß die durch den Motor fließenden Stromimpulse durch lange Strompausen unterbrochen werden.

3. Motor nach Anspruch 1 oder 2, bei welchem der im Watchdog-Zeitglied (120; 170; 170') vorgesehene Multivibrator im aktivierten Zustand periodisch einen Kondensator (96) entlädt, der zu einer Power-Up-Reset-Schaltung (96, 98) des Mikroprozessors (50) gehört und mit einem Reseteingang (RESET/) des Mikroprozessors (50) verbunden ist.

4. Motor nach einem oder mehreren der vorhergehenden Ansprüche, bei welchem im Mikroprozessor (50) Speicherzellen (RES_Bit1, RES_Bit2; RES_Byte) vorgesehen sind, welche nach dem Einschalten und vor dem Power-Up-Reset mit Zufallswerten geladen sind und bei einem Resetvorgang abgefragt werden und dann zu einem Power-Up-Reset führen, wenn sie solche zufallsbedingten Werte enthalten, und daß Mittel vorgesehen sind, welche bei einem Power-Up-Resetvorgang diese Speicherzellen mit vorgegebenen Werten laden, so daß ihre Abfrage bei einem von der Drehung des Motors (20) bewirkten Resetvorgang zu einem von einem Power-Up-Reset verschiedenen, zyklischen Resetvorgang führt.

5. Motor nach einem oder mehreren der vorhergehenden Ansprüche, bei welchem das Tastverhältnis des Multivibrators im Watchdog-Zeitglied (170) von der Drehzahl des Motors (20) abhängig ist.

6. Motor nach Anspruch 5, bei welchem das Tastverhältnis des Watchdog-Zeitglieds (170) bei sich drehendem Motor (20) höher ist als bei blockiertem Motor.

7. Motor nach einem oder mehreren der vorhergehenden Ansprüche, bei welchem zur Erfassung der Rotorstellung ein Hall-IC (60) vorgesehen ist, dessen Ausgangssignal über einen Entkopplungswiderstand (62) einem Eingang (D3) des Mikroprozessors (50) zuführbar ist, welcher Entkopplungswiderstand (62) so dimensioniert ist, daß bei einem internen Kurzschluß an diesem Eingang des Mikroprozessors (50) die Arbeitsweise der übrigen, vom Signal des Hall-IC (60) abhängigen Funktionen nicht beeinträchtigt ist.

## Claims

1. Electronically commutated motor with functions controlled by a microprocessor or microcontroller (50), referred to generally in the following as a "microprocessor", with a watchdog time element (120; 170; 170') which is disposed outside the microprocessor (50) and contains a multi-vibrator with a low vibration frequency,
- which is kept in a deactivated state while the motor (20) is running by signals produced during rotation of the motor, at least above a predetermined motor speed,
- and which in the activated state periodically interrupts the stator current (i1, i2) of the motor (20) without the microprocessor (50) being switched on.

2. Motor according to claim 1, in which in the activated state the multi-vibrator interrupts the stator current (i1, i2) of the motor (20) with a low pulse duty cycle so that the current pulses flowing through the motor are interrupted by long current pauses.

3. Motor according to claim 1 or 2, in which in the activated state the multi-vibrator provided in the watchdog time element (120; 170; 170') periodically discharges a capacitor (96) which forms part of a power-up reset circuit'(96, 98) of the microprocessor (50) and is connected with a reset input (RESET/) of the microprocessor (50).

4. Motor according to one or more of the preceding claims, in which the microprocessor (50) is provided with storage cells (RES_Bit1, RES_Bit2; RES_Byte) which after switching on and before the power-up reset are loaded with random values and in a reset operation are interrogated and then lead to a power-up reset when they contain such random values, and in that means are provided which during a power-up reset operation load these storage cells with predetermined values so that their interrogation during a reset operation caused by the rotation of the motor (20) leads to a cyclic reset operation different to a power-up reset.

5. Motor according to one or more of the preceding claims, in which the pulse duty cycle of the multi-vibrator in the watchdog time element (170) is dependent on the rotational speed of the motor (20).

6. Motor according to claim 5, in which the pulse duty cycle of the watchdog time element (170) is higher when the motor (20) is turning than when the motor is immobilised.

7. Motor according to one or more of the preceding claims, in which to detect the rotor position a Hall IC (60) is provided the output signal of which can be fed to an input (D3) of the microprocessor (50) by means of a decoupling resistor (62) which is of a size such that in the event of an internal short-circuit at this input of the microprocessor (50) the operation of the remaining functions dependent on the signal of the Hall IC (60) is not affected.

## Revendications

1. Moteur commuté électroniquement, avec commande des fonctions par un microprocesseur ou microcontrôleur (50), désigné ci-après d'une manière générale "microprocesseur",
avec un organe de temporisation "chien de garde" (120 ; 170 ; 170'), qui est disposé à l'extérieur du microprocesseur (50) et qui contient un multivibrateur à basse fréquence de vibration,
- lequel, lorsque le moteur (20) tourne, est maintenu dans un état désactivé, au moins au-dessus d'une vitesse prédéfinie de rotation du moteur, par des signaux produits par la rotation du moteur,
- et lequel, à l'état activé, interrompt périodiquement et sans mise sous tension du microprocesseur (50) le courant de stator (i1, i2) du moteur (20).

2. Moteur selon la revendication 1, dans lequel le multivibrateur interrompt à l'état activité le courant de stator (i1, i2) du moteur (20) avec un faible taux d'impulsions, de sorte que les impulsions de courant s'écoulant à travers le moteur sont interrompues par de longues pauses de courant.

3. Moteur selon la revendication 1 ou 2, dans lequel le multivibrateur prévu dans l'organe de temporisation "chien de garde" (120 ; 170 ; 170') décharge périodiquement, à l'état activé, un condensateur (96) qui fait partie d'un circuit (96, 98) de remise à zéro à la mise sous tension du microprocesseur (50) et qui est relié à une entrée (RESÉTI) de remise à zéro du microprocesseur (50).

4. Moteur selon une ou plusieurs des revendications précédentes, dans lequel il est prévu dans le microprocesseur (50) des emplacements de mémoire (RES_Bit1, RES_Bit2; RES_Byte) qui sont chargés de valeurs aléatoires à la suite de la mise sous tension et avant la remise à zéro à la mise sous tension, et qui sont interrogés lors d'un processus de remise à zéro et produisent une remise à zéro à la mise sous tension s'ils contiennent de telles valeurs aléatoires, et en ce qu'il est prévu des moyens qui chargent ces emplacements de mémoire de valeurs prédéfinies lors d'un processus de remise à zéro à la mise sous tension, de sorte que leur interrogation lors d'un processus de remise à zéro produit par la rotation du moteur (20) engendre un processus de remise à zéro cyclique différent d'une remise à zéro à la mise sous tension.

5. Moteur selon une ou plusieurs des revendications précédentes, dans lequel le taux d'impulsions du multivibrateur dans l'organe de temporisation « chien de garde » (170) est fonction de la vitesse de rotation du moteur (20).

6. Moteur selon la revendication 5, dans lequel le taux d'impulsions de l'organe de temporisation « chien de garde » (170) est plus élevé lorsque le moteur (20) tourne que lorsque le moteur est bloqué.

7. Moteur selon une ou plusieurs des revendications précédentes, dans lequel il est prévu pour détecter la position du rotor un circuit intégré (60) à effet Hall, dont le signal de sortie peut être apporté à une entrée (D3) du microprocesseur (50) par l'intermédiaire d'une résistance de découplage (62) qui est dimensionnée de telle sorte que, en cas de court-circuit interne à cette entrée du microprocesseur (50), le mode de fonctionnement des autres fonctions qui dépendent du signal du circuit intégré (60) à effet Hall n'en est pas affecté.
